# EUROPÄISCHE PATENTSCHRIFT

(11) **EP 2 893 299 B1**
(45) Veröffentlichungstag und Bekanntmachung des Hinweises auf die Patenterteilung: **21.11.2018**
(21) Anmeldenummer: 13753184.4
(22) Anmeldetag: 28.08.2013
(51) Int. Cl.: G01D 11/24

(54) **SCHNITTSTELLE ZWISCHEN EINER SENSOREINHEIT UND EINEM EXPLOSIONSFESTEN GEHÄUSE**
INTERFACE BETWEEN A SENSOR UNIT AND AN EXPLOSION-PROOF HOUSING
INTERFACE ENTRE UNE UNITÉ DE CAPTEUR ET UN BOITIER ANTI-DÉFLAGRANT

(30) Priorität: 10.09.2012 DE 102012108415
(43) Veröffentlichungstag der Anmeldung: 15.07.2015
(73) Patentinhaber: Endress+Hauser Flowtec AG, 4153 Reinach (BL) (CH)
(72) Erfinder: FINK, Nikolai, CH-4147 Aesch (CH); BEISSERT, Markus, 79112 Freiburg (DE); BONSCHAB, Frank, 79595 Rümmingen (DE); LARSSON, Björn, CH-4127 Birsfelden (CH)
(74) Vertreter: Andres, Angelika Maria
(86) Internationale Anmeldenummer: PCT/EP2013/067782
(87) Internationale Veröffentlichungsnummer: WO 2014/037258

(56) Entgegenhaltungen:
- EP-A1- 1 628 368
- EP-A2- 2 053 346
- WO-A2-2012/107208
- DE-A1- 19 646 583
- FR-A1- 2 469 763
- US-A- 6 109 979
- US-B1- 6 715 360

## Beschreibung

Die Erfindung betrifft eine Vorrichtung mit einer Sensoreinheit und einem explosionsfesten Gehäuse eine Schnittstelle dazwischen, wobei in dem explosionsfesten Gehäuse ein Messverstärker angeordnet ist.

Die Veröffentlichung FR 2469763 A offenbart einen Gasdetektor für explosive Umgebungen mit einem explosionsgeschützten Gehäuse, das einen Sensor, eine elektronische Schaltung und eine gesteuerte Versorgung enthält. Die Steuerung der Versorgung ermöglicht eine Reduzierung des Stroms im Stromversorgungskabel. Ein Schutzkonus schützt das mehradrige Versorgungskabel das mit einem Klemmenblock verbunden ist. Der Sensor ist ebenfalls mit einem Schutzkonus und einer Schutzscheibe versehen.

Das US Patent Nr. 6,109,979 offenbart eine Verbindung zwischen Schaltungskomponenten innerhalb und außerhalb einer explosionsfesten Kammer, wobei ein Durchführungsklemmenblock einen expiosionsfesten Werkstoff aufweist und sicher in eine Öffnung der Kammer eingepasst ist. Ein Klemmengehäuse auf einer äußeren Oberfläche des Durchführungsklemmenblocks weist Abteilungen auf, welche die einzelnen Anschlussklemmen voneinander trennt um Funkenschläge zwischen benachbarten Klemmen zu vermeiden.

In der Prozessleittechnik, welche vorzugsweise zur Überwachung von Prozessen in der chemischen Industrie oder in fließenden oder stehenden Gewässern eingesetzt wird, sind Sensoren in einer Messumgebung angeordnet. Diese Sensoren messen die Eigenschaften eines zu untersuchenden Mediums und sind mit einer örtlich entfernt angeordneten Prozessleitzentrale verbunden. Um einen solchen Sensor betreiben zu können, ist an einer, den Sensor umfassenden Sensoreinheit ein explosionsfestes Gehäuse angeordnet, welches elektrische Bauteile enthält. Zu den elektrischen Bauteilen gehört auch ein Messverstärker, welcher die Aufgabe hat, den Sensor anzusteuern und die von dem Sensor ausgegebenen Signale auszuwerten. Dieser Messverstärker ist über mehrere Schnittstellen mit der Sensoreinheit verbunden.

Für die mechanische Verbindung weist das explosionsfeste Gehäuse eine Halterung auf, die eine Leiterplatte trägt, auf welcher der Messverstärker befestigt ist. Die elektrische Verbindung führt von dem, mit Kabeln verbundenen Sensor zu einer Durchführung für die Kabel, welche in das Gehäuse der Sensoreinheit eingebracht ist. Dabei sind die vom Sensor kommenden Kabel auf einer Seite mit der Durchführung verlötet, während auf der anderen Seite der Durchführung ebenfalls Kabel angelötet sind, die zum Messverstärker führen. Die zu dem Messverstärker führenden Kabel sind an einer weiteren explosionsfesten Durchführung verlötet, welche den Abschluss des explosionsfesten Gehäuses darstellt. Auf der entgegen gesetzten Seite der explosionsfesten Durchführung werden Kabel direkt an den Messverstärker geführt, die dann mittels eines Steckers mit dem Messverstärker verbunden sind. Eine solche elektrische Verbindung ist nicht nur konstruktiv sehr aufwändig und somit sehr kostenintensiv, sondern erfordert auch einen hohen Herstellungsaufwand.

Der Erfindung liegt somit die Aufgabe zugrunde, Vorrichtung mit einer Sensoreinheit und einem explosionsfesten Gehäuse und einer Schnittstelle dazwischen anzugeben, welche eine kostengünstige und trotzdem einfache mechanische und elektrische Verbindung ermöglicht.

Erfindungsgemäß wird die Aufgabe dadurch gelöst, dass der Messverstärker auf einer, in der Sensoreinheit ausgebildeten Steckeinheit angeordnet ist, die vorzugsweise in das explosionsfeste Gehäuse hineinragt. Diese Anordnung hat den Vorteil, dass der Messverstärker mittels einer einzigen Verbindung direkt mit der Sensoreinheit elektrisch und mechanisch verbunden ist. Durch die Einsparung von Material und Herstellungsaufwand reduzieren sich die Kosten für diese Schnittstelle. Die Steckeinheit ist integraler Bestandteil der Sensoreinheit und bildet auch gleichzeitig den Verschluss der Sensoreinheit. Durch die vorgeschlagene Lösung wird die Schnittstelle zwischen Sensoreinheit und Messverstärker vereinfacht, wodurch neben einer Kostenreduzierung auch eine Reduktion der Fehleranfälligkeit vorhanden ist. Durch die Verringerung der elektrischen Schnittstellen wird das Signalverhalten verbessert und eine kompakte Ausbildung von Geräten ermöglicht.

Vorteilhafterweise ist die Steckeinheit zur Herstellung einer elektrischen Verbindung Stecker- oder buchsenähnlich ausgebildet, wobei eine, den Messverstärker tragende Buchse oder ein, den Messverstärker tragender Stecker auf die Steckeinheit aufgesetzt ist. Dadurch, dass die Schnittstelle aus zwei passgerechten Gegenstücken besteht, ist eine einfache elektrische wie auch mechanische Verbindung zwischen dem Messverstärker und der Sensoreinheit gegeben.

In einer Ausgestaltung weist die Steckeinheit zur räumlichen Trennung von Leitern von Leitern mit unterschiedlichen Signalen wenigstens zwei Kammern auf. Dadurch, dass Leiter, welche Signale mit einer hohen Leistung leiten, in einer anderen Kammer angeordnet sind, als Leiter, die Signale mit einer schwachen Leistung leiten, wird eine elektromagnetische Entkopplung dieser Leiter voneinander erreicht, so dass die Signale mit schwachen Leistungen unbeeinflusst von den Signalen mit hoher Leistung bleiben und deshalb im Messverstärker gut ausgewertet werden können.

In einer weiteren Ausführungsform sind die Leiter zur Positionierung in den mindestens zwei Kammern gruppiert oder getrennt angeordnet. Auf Grund der Gruppierung der Leiter in Abhängigkeit von ihrer Signalstärke wird die elektromagnetische Verträglichkeit der in der Steckeinheit geführten Signale verbessert.

In einer Variante sind die Leiter als Stiftkontakte ausgebildet, welche im Bereich der Sensoreinheit mit Signalleitungen eines Sensors verlötet sind und/oder die den Messverstärker tragende Buchse oder den, den Messverstärker tragenden Stecker aufnehmen. Diese eine Steckeinheit verbindet den Messverstärker mit der Sensoreinheit auf kleinstem Raum, obwohl die Eigenschaften der Sensorsignale und der Messverstärkersignale hinsichtlich ihrer Leistung unterschiedlich sind. So wird eine
robuste kleine, elektromagnetisch verträgliche Verbindungseinheit zur elektrischen Verbindung zwischen Messverstärker und Sensor realisiert.

In einer Weiterbildung sind die Leiter zur Erfüllung der Anforderungen zur druckfesten Kapselung in der Steckeinheit vergossen. Dabei ist die Vergußmasse so gewählt, dass diese den Anforderungen der chemischen Beständigkeit gerecht wird. Durch dieses Vergießen wird die Steckeinheit explosionssicher gestaltet. So werden mögliche Explosionen, die durch die elektronischen Bauteile, die in dem explosionsfesten Gehäuse angeordnet sind, verursacht werden können, nicht an die Sensoreinheit weitergeleitet, sondern bleiben in dem explosionsfesten Gehäuse örtlich begrenzt. Dadurch wird den Anforderungen des Explosionsschutzes entsprochen.

Alternativ sind die Leiter zur Erreichung einer gasdichten Verbindung durch eine Metallplatte geführt, wobei die Leiter mittels verschweißten Glases von der Metallplatte isoliert werden. Auch diese Ausprägung der Schnittstelle erfüllt die Anforderungen der druckfesten Kapselung.

Vorteilhafterweise sind die Leiter durch mindestens einen, mit Masse verbundenen, metallischen Steg elektrisch voneinander isoliert. Damit werden die von dem Messverstärker ausgehenden Erregersignale und die von dem Sensor gelieferten Sensorsignale elektromagnetisch voneinander entkoppelt. Da die metallischen Stege mit Schutzerde oder mit Ground verbunden sind, unterbinden sie eine gegenseitige Signaleinkopplung.

In einer Ausgestaltung trägt ein, die Steckeinheit umgebendes Gehäuseteil der Sensoreinheit ein Gewinde, auf welches das explosionsfeste Gehäuse aufgeschraubt ist, wobei das Gewinde vorzugsweise explosionsfest ausgebildet ist. Dieses explosionsfeste Gewinde verschließt das explosionsfeste Gehäuse, wobei sich der, den Messverstärker tragende Stecker bzw. die, den Messverstärker tragende Buchse im Inneren des explosionsfesten Gehäuses befindet.

In einer Variante ist zur Einstellung einer vorgegebenen Verdrehposition zwischen Sensoreinheit und explosionsfestem Gehäuse ein Arretierungselement am Gehäuse ausgebildet. Somit wird ermöglicht, dass zwischen der Sensoreinheit und dem explosionsfesten Gehäuse unterschiedliche Verdrehungen einstellbar sind. Sobald die gewünschte Position zueinander eingestellt ist, wird das explosionsfeste Gehäuse arretiert. Diese Arretierung kann vorzugsweise durch eine Schraube erfolgen, die durch das explosionsfeste Gehäuse auf den Teil der Sensoreinheit geführt wird, welcher die Steckeinheit trägt. Dabei ist die Arretierung unter- oder oberhalb des Gewindes möglich.

Die Erfindung lässt zahlreiche Ausführungsformen zu. Eine davon soll anhand der in der Zeichnung dargestellten Figuren näher erläutert werden.

Es zeigt:
- Figur 1:: Schnitt durch eine Sensoreinheit, welche mit einem explosionsfesten Gehäuse verbunden ist.
- Figur 2:: Explosionsdarstellung der Steckeinheit.

Gleiche Merkmale sind mit gleichen Bezugszeichen gekennzeichnet.

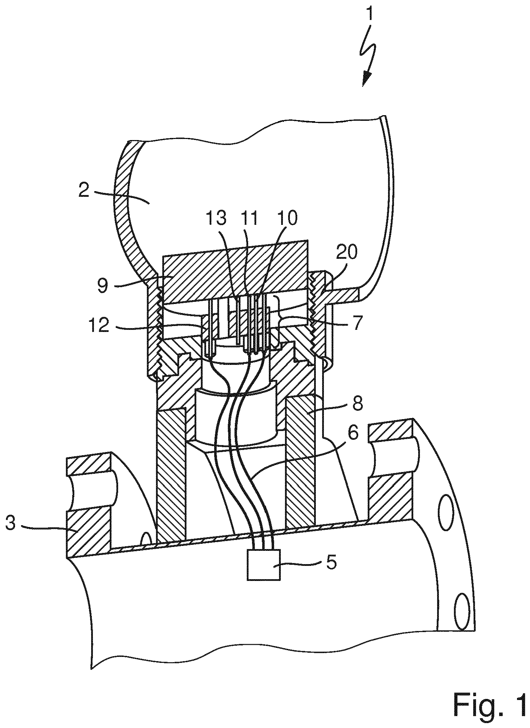

Figur 1 zeigt einen Schnitt durch eine Sensorvorrichtung, die als Durchflussmesseinheit 1 ausgebildet ist und aus einem explosionsfesten Gehäuse 2 und einer Sensoreinheit 3 besteht. Die Durchflussmesseinheit 1 besitzt mindestens einen Sensor 5, der einem Rohr 4 zugeordnet ist, wobei der Sensor 5 den Durchfluss eines durch das Rohr 4 strömenden Mediums misst. Über Sensorkabel 6 ist der Sensor 5 mit einer Steckeinheit 7 verbunden, welche in einem Sensorhals 8 der Sensoreinheit 3 angeordnet ist. Die Steckeinheit 7 ist dabei integraler Bestandteil der Sensoreinheit 3. Die Steckeinheit 7 weist Stiftkontakte 10 auf, die mit dem Sensorkabel 6 verlötet sind. Auf der anderen Seite der Steckeinheit 7, welche dem explosionsfesten Gehäuse 2 zugewandt ist, ist ein Messverstärker 9, welcher innerhalb des explosionsfesten Gehäuses 2 angeordnet ist, auf die Stiftkontakte 10 aufgesetzt. Die dem Messverstärker 9 zugewandte Seite der Steckeinheit 7 ist als Stecker ausgebildet, auf welchem ein Buchsenstecker 18 des Messverstärkers 9 aufsitzt, mittels welchem der Messverstärker 9 mechanisch und elektrisch mit der Steckeinheit 7 verbunden ist.

In dem explosionsfesten Gehäuse 2 sind neben dem Messverstärker 9 noch andere, nicht weiter dargestellte elektronische Bauteile, wie beispielsweise ein Netzteil, ein Feldbus und Ein- und Ausgangselektroniken, angeordnet.

Die Stiftkontakte 10 der Steckereinheit 7 sind auf einer Höhe von mindestens 1 cm vergossen. Dieser Verguss, der sich quer zu den Stiftkontakten 10 erstreckt, umschließt die Stiftkontakte 10 fest und stellt sicher, dass bei einer eventuellen Explosion eines elektronischen Bauteiles durch eine Funkenbildung im explosionsfesten Gehäuse 2 diese Explosion auf das explosionsfeste Gehäuse 2 begrenzt bleibt und nicht auf die Sensoreinheit 3 übergreifen kann.

Darüber hinaus weist die Steckereinheit 7 mindestens einen zwischen mindestens zwei benachbarten Stiftkontakten 10 verlaufenden metallischen Steg 13 auf, welcher zu einer elektromagnetischen Abschirmung zumindest des einen der zwei benachbarten Stiftkontakte 10 von dem anderen der zwei benachbarten Stiftkontakten 10, mithin zu einer elektromagnetischen Entkopplung zwischen Signalen führt, die durch nämliche Stiftkontakte 10 geleitet werden und unterschiedlich starke Leistungen aufweisen können. Aufgrund der Gruppierung bzw. Vereinzelung der Stiftkontakte 10 und durch die Verwendung eines oder mehrerer solcher metallischen Stege 13 innerhalb der Steckeinheit 7 werden die Erregersignale, welche von dem Messverstärker 9 ausgesendet werden, und Sensorsignale, welche vom Sensor 5 als Messsignale an den Messverstärker 9 weitergegeben werden, voneinander isoliert, so dass diese elektrisch entkoppelt sind. Die metallischen Stege 13 können zudem mit Schutzerde oder Ground verbunden sein, wodurch auch eine Signaleinkopplung von außerhalb der Steckereinheit in die Stiftkontakte 10 unterbunden werden kann.

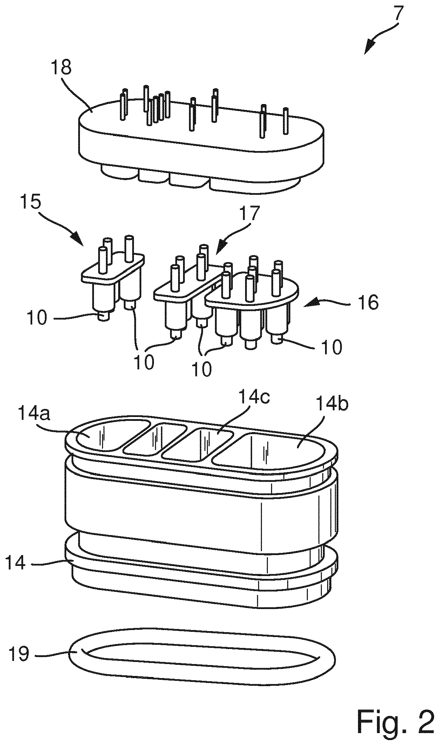

Figur 2 zeigt eine Explosionsdarstellung der Steckeinheit 7. Die Steckeinheit 7 umfasst ein aus Aluminium bestehendes Vierkammer-Steckergehäuse 14. In diese vier Kammern des Steckergehäuses 14 werden verschiedene Gruppierungen von Stiftkontakten 10 eingesetzt. So wird in die erste Kammer 14a eine erste Gruppierung 15 von Stiftkontakten 10 eingesetzt, durch welche der Messverstärker 9 den Sensor 5 ansteuert. In einer zweiten Kammer 14b, welche auf der, der Kammer 14a entgegen gesetzten Seite des Steckergehäuses 14 ausgebildet ist, wird eine zweite Gruppe 16 von Stiftkontakten 10 eingesetzt, welche die von dem Sensor 5 abgegebenen Signale an den Messverstärker 9 übermitteln. Eine dritte Gruppe 17 von Steckkontakten 10 ist zwischen der ersten Kammer 14a und der zweiten Kammer 14b in der dritten Kammer 14c angeordnet. Mittels dieser Gruppe 17 von Steckkontakte 10 werden Zusatzsignale vom Messverstärker 9 an den Sensor 5 übermittelt. Da bei der Ansteuerung des Sensors 5 durch den Messverstärker 9 Signale mittels einer hohen Leistung übertragen werden, ist diese erste Gruppe 15 der Stiftkontakte 10 genau auf der entgegengesetzten Seite zu den Stiftkontakten 10 angeordnet, welche in der zweiten Gruppe 16 zusammengefasst sind und die sehr schwache Sensorsignale an den Messverstärker 9 liefern. Durch diese räumliche Trennung dieser Steckergruppen 15 bzw. 16 wird sichergestellt, dass keine gegenseitige Beeinflussung der Signale, welche durch die zweite Steckergruppe 16 geleitet werden und die nur eine sehr geringe Leistung aufweisen, durch die, eine hohe Leistung aufweisenden Signale der ersten Steckergruppe 15 erfolgt.

Auf die Stiftkontakte 10 der Gruppen 15, 16 und 17 ist ein Buchsenstecker 18 aufgesetzt, der im Endzustand auf dem Messverstärker bestückt wird. Aufgrund der so gestalteten Steckeinheit 7 wird sichergestellt, dass keine elektromagnetische Beeinflussung der Stiftkontakte 10 erfolgt, obwohl diese auf einem relativ geringen Raum nebeneinander angeordnet sind. Das Vierkammersteckergehäuse 14 ist dabei inhärenter Bestandteil des Sensorhalses 8 oder so mit diesem verbunden, dass es den Anforderungen der druckfesten Kapselung genügt.

Zur mechanischen Verbindung des explosionsfesten Gehäuses 2 mit der Sensoreinheit 3 ist an der Sensoreinheit 3 an dem Sensorhals 8 ein Außengewinde ausgebildet. Das explosionsfeste Gehäuse 2 besitzt ein entsprechendes Innengewinde, welches auf das Außengewinde der Sensoreinheit 3 aufgeschraubt ist. Innen- und Außengewinde sind mindestens sieben Mal gegeneinander verschraubt, wodurch ein explosionsfestes Gewinde 20 entsteht (Figur 1). Ein solches explosionsfestes Gewinde 20 genügt der druckfesten Kapselung, die verhindert, dass Explosionen an die Umgebung übertragen werden. Dabei verschließt die Sensoreinheit 3 das explosionsfeste Gehäuse 2, in welchem der Messverstärker 9 angeordnet ist. Der Buchsenstecker 18 des Messverstärkers 9 ist im Inneren des explosionsfesten Gehäuses 2 angeordnet. Da der Messverstärker 9 nach Messprinzipien arbeitet, welche mit einer hohen Energie ausgeführt werden, muss dieser im explosionsgeschützten Gehäuse 2 angeordnet sein.

Die Sensoreinheit 2 kann alternativ aber auch mit einer nicht explosionsfesten Schnittstelle versehen werden, wobei eine explosionsfeste Schnittstelle als Zwischenstecker auf die nicht explosionsfeste Schnittstelle aufgesteckt wird. Dazu müssen die Signale, welche durch die Schnittstelle geführt werden, so ausgeführt werden, dass die Erreger- und die Sensorsignale weit getrennt voneinander angeordnet sind.

## Patentansprüche

1. Vorrichtung, umfassend:
eine Sensoreinheit;
ein explosionsfestes Gehäuse; und
eine Schnittstelle zwischen der Sensoreinheit und dem explosionsfesten Gehäuse, wobei in dem explosionsfesten Gehäuse (2) ein Messverstärker (9) angeordnet ist, **dadurch gekennzeichnet, dass** der Messverstärker (9) auf einer, in der Sensoreinheit (3) ausgebildeten Steckeinheit (7) angeordnet ist.

2. Vorrichtung nach Anspruch 1, **dadurch gekennzeichnet, dass** die Steckeinheit (7) zur Herstellung einer elektrischen Verbindung Stecker- oder buchsenähnlich ausgebildet ist, wobei eine den Messverstärker (9) tragende Buchse (18) oder ein, den Messverstärker (9) tragender Stecker auf die Steckeinheit (7) aufgesetzt sind.

3. Vorrichtung nach Anspruch 1 oder 2, **dadurch gekennzeichnet, dass** die Steckeinheit (7) zur räumlichen Trennung von Leitern (10) mit unterschiedlichen Signalen wenigstens zwei Kammern (14a, 14b) aufweist.

4. Vorrichtung nach Anspruch 3, **dadurch gekennzeichnet, dass** Leiter (10) zur Positionierung in den mindestens zwei Kammern (14a, 14b) gruppiert oder getrennt angeordnet sind.

5. Vorrichtung nach Anspruch 3 oder 4, **dadurch gekennzeichnet, dass** die Leiter als Stiftkontakte (10) ausgebildet sind, welche im Bereich der Sensoreinheit (3) mit Signalleitungen (6) eines Sensors (5) verlötet sind und/oder die den Messverstärker (9) tragende Buchse (18) oder den, den Messverstärker (9) tragenden Stecker aufnehmen.

6. Vorrichtung nach Anspruch 3, 4 oder 5, **dadurch gekennzeichnet, dass** die Leiter (10) zur druckfesten Kapselung in der Steckeinheit (7) vergossen sind.

7. Vorrichtung nach Anspruch 3, 4 oder 5, **dadurch gekennzeichnet, dass** die Leiter (10) zur Erreichung einer druckfesten Kapselung und einer gasdichten Verbindung durch eine Metallplatte geführt sind, wobei die Leiter mittels verschweißtem Glas von der Metallplatte isoliert sind

8. Vorrichtung nach mindestens einem der vorhergehenden Ansprüche 3 bis 7, **dadurch gekennzeichnet, dass** die Leiter (10) durch mindestens einen, insb. mit Masse verbundenen, metallischen Steg (13) elektrisch voneinander geschirmt sind.

9. Vorrichtung nach mindestens einem der vorhergehenden Ansprüche, **dadurch gekennzeichnet, dass** ein, die Steckeinheit (7) umgebendes Gehäuseteil (8) der Sensoreinheit (3) ein Gewinde (20) trägt, auf welches das explosionsfeste Gehäuse (3) aufgeschraubt ist.

10. Vorrichtung nach Anspruch 9, **dadurch gekennzeichnet, dass** zur Einstellung einer vorgegebenen Verdrehposition zwischen Sensoreinheit (3) und explosionsfestem Gehäuse (2) ein Arretierungselement am Gehäuse ausgebildet ist.

11. Vorrichtung nach Anspruch 9 oder 10, **dadurch gekennzeichnet, dass** das Gewinde (20) explosionsfest ausgebildet ist.

12. Vorrichtung nach einem der vorhergehenden Ansprüche, **dadurch gekennzeichnet, dass** die Steckeinheit (7) in das explosionsfeste Gehäuse (2) hineinragt.

## Claims

1. Apparatus, comprising:
a sensor unit:
an explosion-proof housing; and
an interface between the sensor unit and the explosion-proof housing, wherein an amplifier (9) is arranged in the explosion-proof housing (2), **characterized in that** the amplifier (9) is arranged on a plug-in unit (7) formed in the sensor unit (3).

2. Apparatus as claimed in Claim 1, **characterized in that** the plug-in unit (7) is designed to establish an electrical connection similar to a plug or socket, wherein a socket (18) supporting the amplifier (9) or a plug supporting the amplifier (9) is fitted onto the plug-in unit (7).

3. Apparatus as claimed in Claim 1 or 2, **characterized in that** the plug-in unit (7) has at least two chambers (14a, 14b) for the spatial separation of conductors (10) with different signals.

4. Apparatus as claimed in Claim 3, **characterized in that** conductors (10) are arranged in groups or separately for the purpose of being positioned in the at least two chambers (14a, 14b).

5. Apparatus as claimed in Claim 3 or 4, **characterized in that** the conductors are designed as male contacts (10), said contacts being soldered to the signal lines (6) of a sensor (5) in the area of the sensor unit (3), and/or receive the socket (18) supporting the amplifier (9) or the plug supporting the amplifier (9).

6. Apparatus as claimed in Claim 3, 4 or 5 **characterized in that** the conductors (10) are potted in the plug-in unit (7) with a view to creating a flameproof enclosure.

7. Apparatus as claimed in Claim 3, 4 or 5 **characterized in that** the conductors (10) are guided through a metal plate to achieve a flame-proof enclosure and a gas-proof connection, wherein the conductors are isolated from the metal plate using welded glass.

8. Apparatus as claimed in at least one of the previous Claims 3 to 7, **characterized in that** the conductors (10) are electrically shielded from one another by at least one metal segment (13), particularly connected to ground.

9. Apparatus as claimed in at least one of the previous claims, **characterized in that** a housing section (8) of the sensor unit (3) that surrounds the plug-in unit (7) has a thread (20) onto which the explosion-proof housing (3) is screwed.

10. Apparatus as claimed in Claim 9 **characterized in that** a locking unit is designed on the housing to set a predefined position of rotation between the sensor unit (3) and the explosion-proof housing (2).

11. Apparatus as claimed in Claim 9 or 10 **characterized in that** the thread (20) is designed as explosion-proof.

12. Apparatus as claimed in one of the previous claims, **characterized in that** the plug-in unit (7) projects into the explosion-proof housing (2).

## Revendications

1. Dispositif, comprenant
une unité de capteur :
un boîtier résistant aux explosions ; et
une interface entre l'unité de capteur et le boîtier résistant aux explosions, un amplificateur de mesure (9) étant disposé dans le boîtier résistant aux explosions (2), **caractérisé en ce que** l'amplificateur de mesure (9) est disposé sur une unité enfichable (7) installée dans l'unité de capteur (3).

2. Dispositif selon la revendication 1, **caractérisé en ce que** l'unité enfichable (7) est conçue pour l'établissement d'une liaison électrique via une connexion mâle ou femelle, une embase femelle (18) supportant l'amplificateur de mesure (9) ou une embase mâle supportant l'amplificateur de mesure (9) étant montée sur l'unité enfichable (7).

3. Dispositif selon la revendication 1 ou 2, **caractérisé en ce que** l'unité enfichable (7) présente au moins deux chambres (14a, 14b) pour la séparation dans l'espace des conducteurs (10) avec différents signaux.

4. Dispositif selon la revendication 3, **caractérisé en ce que** les conducteurs (10) sont disposés, pour leur positionnement, de façon groupée ou séparée dans les au moins deux chambres (14a, 14b).

5. Dispositif selon la revendication 3 ou 4, **caractérisé en ce que** les conducteurs sont conçus en tant que contacts mâles (10), lesquels sont soudés dans la zone de l'unité de capteur (3) avec les lignes de signal (6) d'un capteur (5), et/ou recueillent l'embase femelle (18) supportant l'amplificateur de mesure (9) ou l'embase mâle supportant l'amplificateur de mesure (9).

6. Dispositif selon la revendication 3, 4 ou 5, **caractérisé en ce que** les conducteurs (10) sont moulés dans l'unité enfichable (7) afin d'obtenir une enveloppe antidéflagrante.

7. Dispositif selon la revendication 3, 4 ou 5, **caractérisé en ce que** les conducteurs (10) sont guidés à travers une plaque métallique pour l'obtention d'une enveloppe antidéflagrante et d'une liaison étanche aux gaz, les conducteurs étant isolés de la plaque métallique au moyen de verre soudé.

8. Dispositif selon l'une des revendications précédentes 3 à 7, **caractérisé en ce que** les conducteurs (10) sont protégés électriquement entre eux au moyen d'un segment métallique, notamment relié à la masse.

9. Dispositif selon l'une des revendications précédentes, **caractérisé en ce qu'**une partie de boîtier (8) de l'unité de capteur (3), entourant l'unité enfichable (7), comporte un filetage (20), sur lequel est vissé le boîtier résistant aux explosions (3).

10. Dispositif selon la revendication 9, **caractérisé en ce qu'**est prévu, pour le réglage d'une position de rotation prédéfinie entre l'unité de capteur (3) et le boîtier résistant aux explosions (2), un élément d'arrêt sur le boîtier.

11. Dispositif selon la revendication 9 ou 10, **caractérisé en ce que** le filetage est conçu de façon à résister aux explosions.

12. Dispositif selon l'une des revendications précédentes, **caractérisé en ce que** l'unité enfichable (7) pénètre dans le boîtier résistant aux explosions (2).
